# EUROPEAN PATENT APPLICATION

(11) **EP 3 498 970 A1**
(43) Date of publication of application: **19.06.2019**
(21) Application number: 18206103.6
(22) Date of filing: 14.11.2018
(51) Int. Cl.: F01D 5/08, F01D 25/12, F02C 6/08, F02C 7/12

(54) **MODULATED COOLING AIR CONTROL SYSTEM AND METHOD FOR A TURBINE ENGINE**

(30) Priority: 14.12.2017 US 201715842350
(71) Applicant: Rolls-Royce Corporation, Indianapolis, Indiana 46225 (US)
(72) Inventor: Grzelecki, Michael, Westfield, IN Indiana 46074 (US); Monzella, Michael, Indianapolis, IN Indiana 46220 (US); Wiley, Renee, Avon, IN Indiana 46123 (US)
(74) Representative: Rolls-Royce plc

(57) **Abstract**

Various embodiments of the present disclosure provide a turbine engine cooling system configured to provide cooling air to a particular region of the engine to cool that region of the engine. The cooling system is configured to modulate the flow of cooling air to reduce the amount of cooling air flowing to that region of the engine during periods in which less cooling is needed to avoid providing more cooling air than is needed to adequately cool that region of the engine. The cooling system is configured to determine when to modulate the flow of cooling air based on temperature readings obtained from within the cooled region.

## Description

### FIELD

The present disclosure relates to turbine engine cooling systems, and more specifically to turbine engine cooling systems configured to modulate the flow of cooling air delivered to a cooled region based on temperature readings obtained from within the cooled region.

### BACKGROUND

Certain known gas turbine engines include cooling systems configured to direct air from the compressor stage of the engine to the turbine stage of the engine to cool the components in the turbine stage, such as the turbine discs and blades. Since the cooling air is typically bled from the compressor, the work required to compress the cooling air is lost and thus the efficiency of the engine decreases as more cooling air is diverted from the compressor stage to the turbine stage. There is a continuing need to minimize the amount of air diverted from the compressor stage to the turbine stage for cooling.

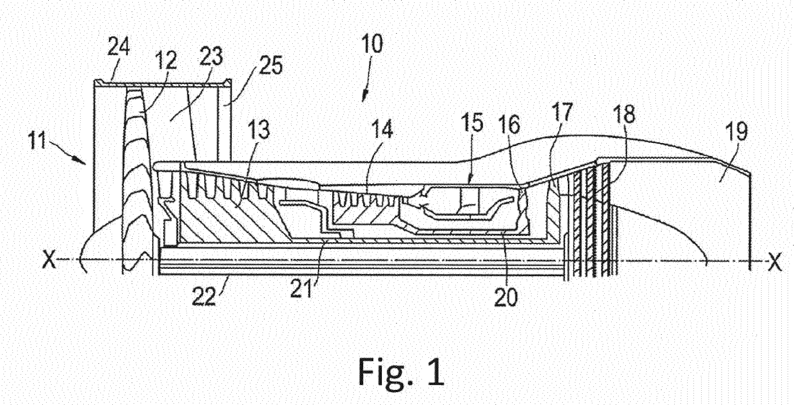

**Figure 1** is a simplified partial cutaway view of an example gas turbofan engine 10 (sometimes referred to as the "engine" for brevity) having a rotational axis X-X. The engine 10 includes an air intake 11, a propulsive fan 12, an intermediate-pressure compressor 13, a high-pressure compressor 14, a combustor 15, a high-pressure turbine 16, an intermediate-pressure turbine 17, a low-pressure turbine 18, and an exhaust nozzle 19. The high-pressure compressor 14 and the high-pressure turbine 16 are connected via a shaft 20 and rotate together about the rotational axis X-X. The intermediate-pressure compressor 13 and the intermediate-pressure turbine 17 are connected via a shaft 21 and rotate together about the rotational axis X-X. The fan 12 and the low-pressure turbine 18 are connected via a shaft 22 and rotate together about the rotational axis X-X. A fan nacelle 24 generally surrounds the fan 12 and defines the air intake 11 and a bypass duct 23. Fan outlet guide vanes 25 secure the fan nacelle 24 to the core engine casing.

In operation, the fan 12 compresses air entering the air intake 11 to produce a bypass air flow that passes through the bypass duct 23 to provide propulsive thrust and a core air flow into the intermediate-pressure compressor 13. The intermediate-pressure compressor 13 compresses the air before delivering the air to the high-pressure compressor 14. The high-pressure compressor 14 further compresses the air and exhausts the compressed air into the combustor 15. The combustor 15 mixes the compressed air with fuel and ignites the fuel/compressed air mixture. The resultant hot combustion products then expand through-and thereby drive-the high-, intermediate-, and low-pressure turbines 16, 17, and 18 before being exhausted through the exhaust nozzle 19 to provide additional propulsive thrust. The high-, intermediate-, and low-pressure turbines 16, 17, and 18 respectively drive the high-pressure compressor 14, the intermediate-pressure compressor 13, and the fan 12 via the respective shafts 20, 21, and 22.

### SUMMARY

The present disclosure provides a turbine engine and a method for controlling the modulation cooling air flow in a turbine engine as set out in the appended claims.

Various embodiments of the present disclosure provide a turbine engine cooling system configured to provide cooling air to a particular region of the engine to cool that region of the engine. The cooling system is configured to modulate the flow of cooling air to reduce the amount of cooling air flowing to that region of the engine during periods in which less cooling is needed to avoid providing more cooling air than is needed to adequately cool that region of the engine. The cooling system is configured to determine when to modulate the flow of cooling air based on temperature readings obtained from within the cooled region.

An embodiment of disclosed subject matter includes a turbine engine having a turbine section defining a first and second cavity, a cooling system having a modulation active mode and a modulation off mode; the cooling system supplying a first feed of cooling air to the first and second cavities in the modulation off mode and a second feed of cooling air to the first and second cavities in the modulation active mode and the first feed having a greater mass flow rate than a mass flow rate of the second feed. The disclosed turbine engine also includes a first turbine disc defining a portion of the first cavity and a first rim defining another portion of the first cavity; a second turbine disc defining a portion the second cavity, a second rim defining another portion of the second cavity. The turbine engine further includes a first temperature sensor configured to sense a temperature within the first cavity at the first rim of the first turbine disc; and a controller configured to monitor the sensed temperature; and place the cooling system in the modulation off mode based on a at least a determination that the sensed temperature exceeds a first threshold temperature.

The disclosed subject matter also includes a method for controlling the modulation cooling air flow in a turbine engine. An embodiment of the method including sensing, by a first temperature sensor, a temperature within a first cavity at a rim of a first turbine section, the first cavity defined in part by the first turbine section; generating, by the first temperature sensor, a signal representative of the sensed temperature; and sending, by the first temperature sensor and to a controller, the signal representative of the sensed temperature. The method further includes monitoring, by the controller, the sensed temperature; determining if the sensed temperature is greater than a first temperature threshold; and, controlling, by the controller, a flow control device to enable cooling air to flow at a first mass flow rate from a cooling air source into the first cavity and a second cavity, based on at least the determination the sensed temperature is greater than the first temperature threshold wherein the second cavity is defined in part by a second turbine section.

Another embodiment of the disclosed subject matter includes a method of controlling the modulation state of a cooling system in a turbine engine, wherein the cooling system has a first modulation state in which cooling air is provided to cool a plurality of turbine section rims at a first mass flow rate and a second modulation state in which cooling air is provided to cool the plurality of turbine section rims at a second mass flow rate. The method includes monitoring a first temperature of a first rim of the plurality of turbine section rims; and switching the operation of the cooling system from the second modulation state to the first modulation state when the monitored first temperature rises through a first temperature threshold; wherein the second mass flow rate is less than the first mass flow rate.

### BRIEF DESCRIPTION OF THE FIGURES

**Fig. 1** is a partial cutaway view of one example embodiment of a turbofan gas turbine engine of the present disclosure.
**Fig. 2** is a block diagram of one example embodiment of a turbine engine cooling system of the present disclosure.
**Fig. 3** is a fragmentary cross-sectional view of part of the engine of Figure 1.
**Fig. 4** is a flowchart of one example method for modulating cooling air flow in a turbine engine of the present disclosure.
**Fig. 5** is a flowchart of another example method for modulating cooling air flow in a turbine engine of the present disclosure.
**Fig. 6** is a chart illustrating the effect of threshold selection on temperature cycling in a modulated cooling system.

### DETAILED DESCRIPTION

While the features, methods, devices, and systems described herein may be embodied in various forms, the drawings show and the detailed description describes some exemplary and non-limiting embodiments. Not all of the components shown and described in the drawings and the detailed descriptions may be required, and some implementations may include additional, different, or fewer components from those expressly shown and described. Variations in the arrangement and type of the components; the shapes, sizes, and materials of the components; and the manners of attachment and connections of the components may be made without departing from the scope of the claims as set forth herein. This specification is intended to be taken as a whole and interpreted in accordance with the principles of the invention as taught herein and understood by one of ordinary skill in the art.

As used herein, "downstream" means in the direction of air flow, and "upstream" means opposite the direction of airflow.

Various embodiments of the present disclosure provide a turbine engine cooling system (sometimes referred to as the "cooling system" for brevity) configured to provide cooling air to a particular region of the engine 10 to cool that region of the engine 10. The cooling system 100 is configured to modulate the flow of cooling air to reduce the amount of cooling air flowing to that region of the engine 10 during periods in which less cooling is needed to avoid providing more cooling air than is needed to adequately cool that region of the engine 10. The cooling system is configured to determine when to modulate the flow of cooling air based on temperature readings obtained from within the cooled region.

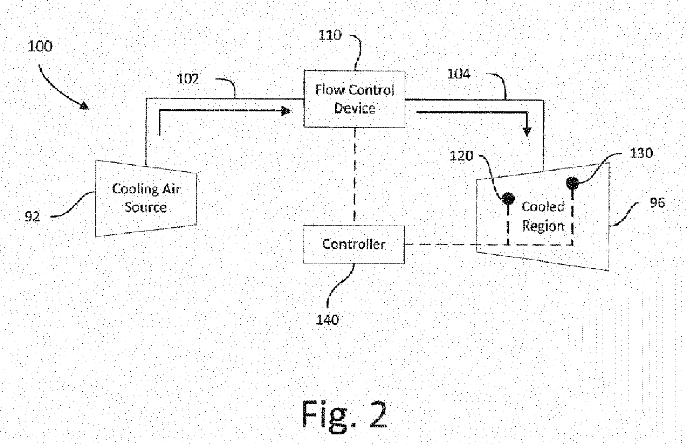

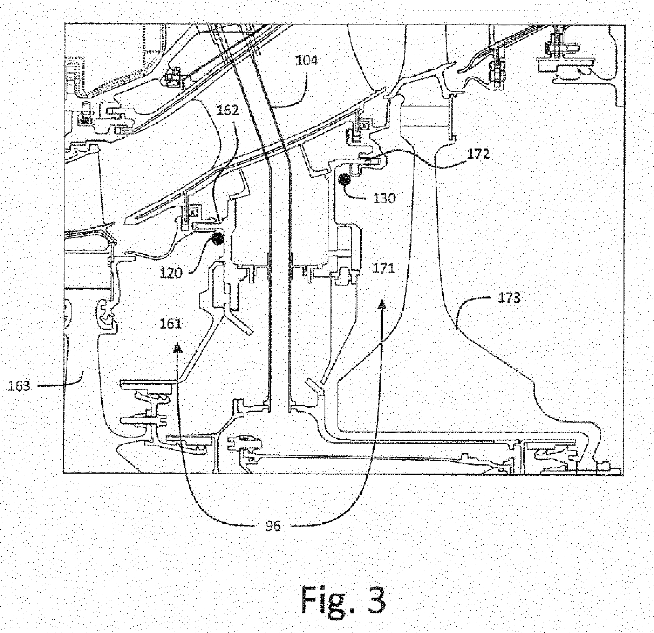

**Figure 2** shows one example embodiment of a cooling system 100 fluidly connectable to a cooling air source 92 and a cooled region 96. In this example embodiment, the cooling air source 92 is one the compressor stage (such as the high-pressure compressor stage) of the engine 10, though the cooling air source may be any suitable source of cooling air in other embodiments. As shown in **Figure 3**, the cooled region 96 includes a first cavity defined in part by the turbine disc and rim of the high-pressure turbine 16 (left arrow) and by the second turbine disc and rim of the intermediate-pressure turbine 17 (right arrow), and a second cavity defined in part by the second turbine disc and rim of the intermediate-pressure turbine 17. However, the cooled region 96 may be any suitable region of the engine 10 to-be-cooled by cooling air from the cooling air source 92, such as the low pressure turbine stages 18.

The cooling system 100 includes a first cooling air tube (conduit, pipe, line, feed or duct) 102, a flow control device 110, a second cooling air tube 104, a first temperature sensor 120, a second temperature sensor 130, and a controller 140. The cooling system may include any suitable quantity of cooling air tubes configured to (as explained below) direct cooling air from the cooling air source 92 into the cooled region 96, even though only one set of cooling air tubes is shown in Figure 2 for clarity.

The flow control device 110 is a suitable device configured to control whether and how much cooling air can flow from the cooling air source 92 to the cooled region 96. The flow control device 110 has a cooling air inlet and a cooling air outlet (not labeled). In one example embodiment, the flow control device 110 includes a valve. In another example embodiment, the flow control device 110 includes a valve and a vortex amplifier fluidly connectable to a control air source, as described in United States patent U.S. 7,712,317.

The first and second temperature sensors 120 and 130 are thermocouples or any other suitable sensors configured to sense the temperature of a fluid and to generate and send signals that correspond to the sensed temperature to the controller 140 (described below). Suitable sensors may include strain gages, transducers or electromagnetic transceivers.

The controller 140 includes a central processing unit (CPU) (not shown) communicatively connected to a memory (not shown). In certain embodiments, the engine control system of the aircraft functions as the controller 140, while in other embodiments the controller 140 is a dedicated controller of the cooling system 100. The CPU is configured to execute program code or instructions stored on the memory to control operation of the cooling system 100. The CPU may be a microprocessor; a content-addressable memory; a digital-signal processor; an application-specific integrated circuit; a field-programmable gate array; any suitable programmable logic device, discrete gate, or transistor logic; discrete hardware components; or any combination of these. The CPU may also be implemented as a combination of these devices, such as a combination of a digital signal processor and a microprocessor, a plurality of microprocessors, or one or more microprocessors in conjunction with a digital signal processor core.

The memory is configured to store, maintain, and provide data as needed to support the functionality of the cooling system 100. For instance, in various embodiments, the memory stores program code or instructions executable by the CPU to control operation of the cooling system 100. The memory includes any suitable data storage device or devices, such as volatile memory (e.g., random-access memory, dynamic random-access memory, or static random-access memory); non-volatile memory (e.g., read-only memory, mask read-only memory, programmable read-only memory, erasable programmable read-only memory, electrically erasable programmable read-only memory); and/or non-volatile random-access memory (e.g., flash memory, solid-state storage).

One end of the first cooling air tube 102 is in fluid communication with the cooling air source 92, and the other end of the first cooling air tube 102 is in fluid communication with the cooling air inlet of the flow control device 110. One end of the second cooling air tube 104 is in fluid communication with the cooling air outlet of the flow control device 110, and the other end of the second cooling air tube 104 is in fluid communication with the cooled region 96. The first cooling air tube 102, the flow control device 110, and the second cooling air tube 104 define a cooling air path between the cooling air source 92 and the cooled region 96.

As best shown in Figure 3, the first temperature sensor 120 is positioned at the rear rim 162 of the high-pressure turbine section 16 such that the first temperature sensor 120 can sense the temperature of the fluid within the cavity 161 defined by the rear rim 162 and the high-pressure turbine disc 163. As also shown in Figure 3, the second temperature sensor 130 is positioned in the cavity 171 defined by the front rim 172 and the intermediate-pressure turbine disc 173 (i.e., downstream of the first temperature sensor 120) such that the second temperature sensor 130 can sense the temperature of the fluid within the cavity 171 of the intermediate-pressure turbine section 17.

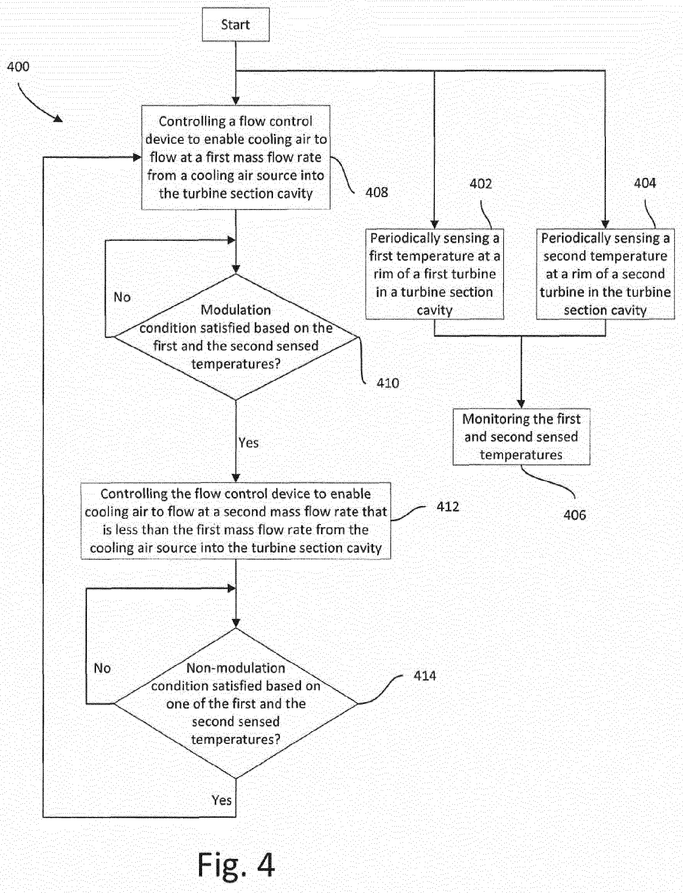

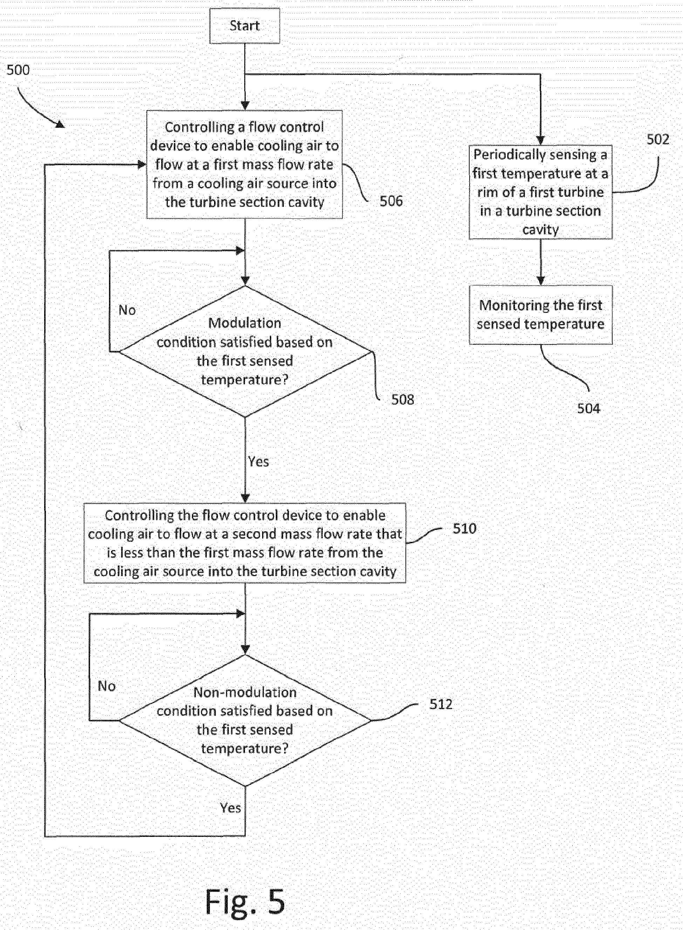

As shown in Figure 2, the controller 140 is operatively connected to the flow control device 110 to control the flow control device 110 to control the amount of cooling air that can flow through the first cooling air path, as described below in accordance with Figures 4 and 5. The controller 140 is communicatively connected to the first and second temperature sensors 120 and 130 to receive the signals from the temperature sensors that correspond to the sensed temperatures. While not shown it is equally envisioned that additional temperature sensors position in cavities of additional turbine sections may also be implemented.

In operation, initially, the controller 140 controls the flow control device 110 such that cooling air flows from the cooling air source 92 through the first cooling air passage and into the cooled region 96 at a first mass flow rate. During operation, the first and second temperature sensors 120 and 130 periodically sense the fluid temperature at the rear rim of the high-pressure turbine section 16 and the front rim of the intermediate-pressure turbine section 17, respectively; generate signals corresponding to the sensed temperatures; and send the signals to the controller 140.

The controller 140 monitors the sensed temperatures to (in part) determine whether a modulation condition is satisfied. When the modulation condition is satisfied, less cooling air is required to adequately cool the cooled region 96. In this example embodiment, the modulation condition is satisfied when both: (1) the sensed temperature at the rear rim 162 of the high-pressure turbine section 16 (the "first sensed temperature") is below a first low temperature threshold 602 and (2) the sensed temperature at the front rim 172 of the intermediate-pressure turbine section 17 (the "second sensed temperature") is below a second low temperature threshold (that may be less than the first temperature threshold, given the nature of the materials used in the intermediate pressure turbine section vs. those used in the high pressure turbine section).

Responsive to determining that the modulation condition is satisfied, the controller 140 controls the flow control device 110 such that cooling air flows from the cooling air source 92 through the first cooling air passage 104 and into the cooled region 96 (cavities 161 and 171) at a second mass flow rate that is less than the first mass flow rate. The controller 140 continues to monitor the sensed temperatures to (in part) determine whether a non-modulation condition is satisfied. When the non-modulation condition is satisfied, more cooling air is required to adequately cool the cooled region 96. In this example embodiment, the non-modulation condition is satisfied when the first of: (1) the first sensed temperature exceeds a first high temperature threshold that is greater than the first low temperature threshold; and (2) the second sensed temperature exceeds a second high temperature threshold that likewise is greater than the second low temperature threshold (and may be less than the first high temperature threshold). The high temperature thresholds are a function of at least the materials and structures in the respective high pressure and intermediate pressure turbine sections. For example, the high pressure turbine section may be formed from a nickel alloy with high heat tolerance while the intermediate pressure turbine section by use a less expensive alloy with less heat tolerance.

Responsive to determining that the non-modulation condition is satisfied, the controller 140 controls the flow control device 110 such that cooling air flows from the cooling air source 92 through the first cooling air passage and into the cooled region 96 at the first mass flow rate. At this point, the controller 140 continues to monitor the sensed temperatures to (in part) determine whether the modulation condition is satisfied.

**Figure 4** is a flowchart illustrating a method 400 for modulating cooling air flow from a cooling air source to a turbine section cavity of a turbine engine. In various embodiments, instructions stored in the memory of the controller 140 and executed by the CPU of the controller 140 represent the method 400. Although the method 400 is described with respect to the flowchart shown in Figure 4, other methods of performing the acts described below may be employed. In certain embodiments, the blocks or diamonds are performed in the order in which they are shown, while in other embodiments the blocks or diamonds are performed in different orders.

The method 400 starts responsive to activation of the turbine engine or receipt of an input to activate the modulation system. In response, a first temperature sensor begins periodically sensing a first temperature at a rim of a first turbine in the turbine section cavity, as block 402 indicates, and a second temperature sensor begins periodically sensing a second temperature at a rim of a second turbine in the turbine section cavity, as block 404 indicates. The first and second temperature sensors generate signals representative of the first and second sensed temperatures, respectively, and send the signals to a controller. The controller monitors the first and second sensed temperatures, as block 406 indicates.

Also in response to receipt of the instructions to begin directing cooling air from the cooling air source to the turbine section cavity, the controller controls a flow control device to enable the cooling air to flow at a first mass flow rate from the cooling air source into the turbine section cavity, as block 408 indicates. The controller determines whether a modulation condition is satisfied based in part on the first and second sensed temperatures, as diamond 410 indicates.

Responsive to determining at diamond 410 that the modulation condition is satisfied, the controller controls the flow control device to enable the cooling air to flow at a second mass flow rate that is less than the first mass flow rate from the cooling air source into the turbine section cavity, as block 412 indicates. The controller determines whether a non-modulation condition is satisfied based in part on one of the first and second sensed temperatures, as diamond 414 indicates. Responsive to determining at diamond 414 that the non-modulation condition is satisfied, the process 400 returns to block 408 and the controller again controls the flow control device to enable the cooling air to flow at the first mass flow rate from the cooling air source to the turbine section cavity.

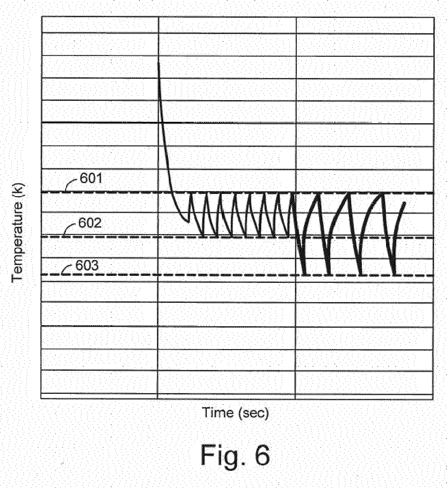

Generally, the turbine section cavity heats up when the cooling air is flowing into the turbine section cavity at the second mass flow rate and cools down when the cooling air is flowing into the turbine section cavity at the first mass flow rate. This causes the turbine cavity to experience cyclical heating and cooling as the cooling system turns cooling air modulation on and off. In certain embodiments, the controller 140 is configured with a low temperature threshold selected to prevent excessive cycling of the system (e.g. selection of a threshold that is lower than required) to prevent damages to components of the engine 10. **Figure 6** illustrates the deleterious cycling that may occur if the low temperature threshold selected is too high. The first high temperature threshold is shown as line 601. When the sensed temperature of the cavity reaches the first high temperature threshold the modulation system turns OFF (enters OFF state/mode). With the introduction of cooling air, the sensed temperature falls until it reaches the low temperature limit at which time the modulation system turns ON (enters the Active state/mode). Fig. 6 also illustrates the behavior of the modulated cooling system with two different low temperature thresholds. The first low temperature threshold 602 causes excessive cycling of the system, whereas a lower low temperature threshold 603 may be selected to reduce the cycling.

In other embodiments, the cooling system includes a single temperature sensor 120. In operation, initially, the controller 140 controls the flow control device 110 such that cooling air flows from the cooling air source 92 through the first cooling air passage and into the cooled region 96 at a first mass flow rate. During operation, the first temperature sensor 120 periodically senses the fluid temperature of the cavity 161 at the rear rim 162 of the high-pressure turbine section 16, generates a signal corresponding to the sensed temperature, and sends the signal to the controller 140.

The controller 140 monitors the sensed temperature to (in part) determine whether a modulation condition is satisfied. When the modulation condition is satisfied, less cooling air is required to adequately cool the cooled region 96 (cavities 161 and 171). In this example embodiment, the modulation condition is satisfied when: (1) the sensed temperature in the cavity 161 at the rear rim 162 of the high-pressure turbine section 16 (the "first sensed temperature") is below a first low temperature threshold. In these embodiments employing a single temperature sensor to control cooling air flow modulation, the first low temperature threshold may be lower than the first threshold temperature in embodiments employing multiple temperature sensors to control cooling air flow modulation. This accounts for the fact that the temperature of the cavity 171 at the front rim of the intermediate-pressure turbine section 17 is not measured and thus the first low temperature threshold must be established with the intermediate pressure turbine section 17 in mind, in addition to provide additional leeway to reduce or eliminate the potential for the front rim of the intermediate-pressure turbine section 17 to reach failure temperature.

Responsive to determining that the modulation condition is satisfied, the controller 140 controls the flow control device 110 such that cooling air flows from the cooling air source 92 through the first cooling air passage and into the cooled region 96 at a second mass flow rate that is less than the first mass flow rate. The controller 140 continues to monitor the sensed temperature to (in part) determine whether a non-modulation condition is satisfied. When the non-modulation condition is satisfied, more cooling air is required to adequately cool the cooled region 96. In this example embodiment, the non-modulation condition is satisfied when the first sensed temperature exceeds a first high temperature threshold that again would be necessarily greater than the first low temperature threshold.

Responsive to determining that the non-modulation condition is satisfied, the controller 140 controls the flow control device 110 such that cooling air flows from the cooling air source 92 through the first cooling air passage and into the cooled region 96 at the first mass flow rate. At this point, the controller 140 continues to monitor the sensed temperature to (in part) determine whether the modulation condition is satisfied.

**Figure 5** is a flowchart illustrating a method 500 for modulating cooling air flow from a cooling air source to a turbine section cavity of a turbine engine. In various embodiments, instructions stored in the memory of the controller 140 and executed by the CPU of the controller 140 represent the method 500. Although the method 500 is described with respect to the flowchart shown in Figure 5, other methods of performing the acts described below may be employed. In certain embodiments, the blocks or diamonds are performed in the order in which they are shown, while in other embodiments the blocks or diamonds are performed in different orders.

The method 500 starts responsive to activation of the turbine engine or receipt of an input to activate the modulation system. In response, a first temperature sensor begins periodically sensing a first temperature at a rim of a first turbine in the turbine section cavity, as block 502 indicates. The first temperature sensor generates a signal representative of the first sensed temperature and sends the signals to a controller. The controller monitors the first sensed temperature, as block 504 indicates.

Also in response to receipt of the instructions to begin directing cooling air from the cooling air source to the turbine section cavity, the controller controls a flow control device to enable the cooling air to flow at a first mass flow rate from the cooling air source into the turbine section cavity, as block 506 indicates. The controller determines whether a modulation condition is satisfied based in part on the first sensed temperature, as diamond 508 indicates.

Responsive to determining at diamond 508 that the modulation condition is satisfied, the controller controls the flow control device to enable the cooling air to flow at a second mass flow rate that is less than the first mass flow rate from the cooling air source into the turbine section cavity, as block 510 indicates. The controller determines whether a non-modulation condition is satisfied based in part on the first sensed temperature, as diamond 512 indicates. Responsive to determining at diamond 512 that the non-modulation condition is satisfied, the process 500 returns to block 506 and the controller again controls the flow control device to enable the cooling air to flow at the first mass flow rate from the cooling air source to the turbine section cavity.

An aspect of the disclosed subject matter also includes the use of a control parameter that is a function of cavity temperature and other system characteristics such as cavity pressure, core flow temperature, core flow pressure, or time (duration). While the temperature measurement in the cooled region is a primary way to control the system since the temperatures it measures are likely the most sensitive in the cooling air system, the controlled parameter could be varied based on a schedule with the other reference parameter which could allow for high fidelity limits and the ability to detect failures in both the modulated and non-modulated state of the air system by comparing measured temperatures against the scheduled air system temperatures.

Various modifications to the embodiments described herein will be apparent to those skilled in the art. These modifications can be made without departing from the present disclosure defined by the appended claims.

The subject matter of the disclosure may also relate, among others, to the following aspects:
1. A turbine engine comprising:
   a turbine section defining a first and a second cavity,
   a cooling system having a modulation active mode and a modulation off mode; the cooling system supplying a first feed of cooling air to the first and the second cavities in the modulation off mode and a second feed of cooling air to the first and second cavities in the modulation active mode, the first feed having a greater mass flow rate than a mass flow rate of the second feed;
   a first turbine disc defining a portion of the first cavity, a first rim defining another portion of the first cavity;
   a second turbine disc defining a portion the second cavity, a second rim defining another portion of the second cavity;
   a first temperature sensor configured to sense a sensed temperature within the first cavity at the first rim of the first turbine disc; and,
   a controller configured to:
      monitor the sensed temperature; and,
      place the cooling system in the modulation off mode based on at least a determination that the sensed temperature exceeds a first threshold temperature.
2. The turbine engine of Aspect 1 wherein the controller is configured to place the cooling system in the modulation active mode based on at least a determination that the sensed temperature is less than a low temperature threshold.
3. The turbine engine of Aspect 1, wherein the first turbine disc is upstream of the second turbine disc.
4. The turbine engine of Aspect 1, further comprising:
   a second temperature sensor configured to sense a second sensed temperature within the second cavity at the second rim;
   and wherein the controller is configured to;
      monitor the second sensed temperature; and,
      place the cooling system in the modulation off mode based on a at least a determination that the second sensed temperature exceeds a second threshold temperature.
5. The turbine engine of Aspect 4, wherein the first and second threshold temperatures are not equal.
6. The turbine engine of Aspect 1, wherein the first threshold temperature is a function of heat characteristics of at least the first and second turbine discs.
7. The turbine engine of Aspect 4 wherein the controller is configured to place the cooling system in the modulation active mode based on at least a determination that the sensed temperature is less than a low temperature threshold and the second sensed temperature is less than a second low temperature threshold.
8. The turbine engine of Aspect 1, wherein the first turbine disc is a component of a high-pressure turbine and the second turbine disc is a component of an intermediate-pressure turbine.
9. The turbine engine of Aspect 1, wherein the first temperature sensor is selected from the group comprising a thermocouple, a strain gage, transducer and an electromagnetic transceiver.
10. A method for controlling the modulation cooling air flow in a turbine engine, the method comprising:
   sensing, by a first temperature sensor, a sensed temperature within a first cavity at a rim of a first turbine section, the first cavity defined in part by the first turbine section;
   generating, by the first temperature sensor, a signal representative of the sensed temperature;
   sending, by the first temperature sensor and to a controller, the signal representative of the sensed temperature;
   monitoring, by the controller, the sensed temperature;
   determining if the sensed temperature is greater than a first temperature threshold; and,
   controlling, by the controller, a flow control device to enable cooling air to flow at a first mass flow rate from a cooling air source into the first cavity and a second cavity, based on at least the determination the sensed temperature is greater than the first temperature threshold wherein the second cavity is defined in part by a second turbine section.
11. The method of Aspect 10, further comprising:
   determining if the sensed temperature is lower than a low temperature threshold;
   controlling, by the controller, the flow control device to enable the cooling air to flow at a second mass flow rate from the cooling air source into the first and second cavities, based on at least the determination the sensed temperature is lower than the low temperature threshold.
12. The method Aspect 10, further comprising:
   sensing, by a second temperature sensor, a sensed second temperature within the second cavity at a second rim of the second turbine section;
   generating, by the second temperature sensor, a signal representative of the sensed second temperature;
   sending, by the second temperature sensor and to the controller, the signal representative of the sensed second temperature;
   monitoring, by the controller, the sensed second temperature;
   determining if the sensed second temperature is greater than a second temperature threshold; and,
   controlling, by the controller, the flow control device to enable cooling air to flow at the first mass flow rate from the cooling air source into the first cavity and the second cavity, based on at least the determination the sensed second temperature is greater than the second temperature threshold.
13. The method of Aspect 11, wherein the second mass flow rate being less than the first mass flow rate.
14. A method of controlling the modulation state of a cooling system in a turbine engine, wherein the cooling system has a first modulation state in which cooling air is provided to cool a plurality of turbine section rims at a first mass flow rate and a second modulation state in which cooling air is provided to cool the plurality of turbine section rims at a second mass flow rate, the method comprising;
   monitoring a first temperature of a first rim of the plurality of turbine section rims; and,
   switching the operation of the cooling system from the second modulation state to the first modulation state when the monitored first temperature rises through a first temperature threshold;
   wherein the second mass flow rate is less than the first mass flow rate.
15. The method of Aspect 14, further comprising
   monitoring a second temperature of a second rim of the plurality of turbine section rims;
   wherein the monitored second temperature is less than a second temperature threshold.
16. The method of Aspect 14 or 15, wherein the first and second temperature thresholds are not the same.
17. The method of any one of Aspects 14 to 16, wherein the first and second temperature thresholds are a function of the thermal characteristics of the respective first and second turbine sections.
18. The method of any one of Aspects 14 to 17 further comprising switching the operation of the cooling system from the first modulation state to the second modulation when the monitored first temperature drops through a low temperature threshold.
19. The method of any one of Aspects 14 to 18, further comprising switching the operation of the cooling system from the first modulation state to the second modulation state when one of the monitored first and second temperatures drops through a respective first and second low temperature thresholds and the other of the monitored first and second temperatures is less than the respective first and second low temperature thresholds.

## Claims

1. A turbine engine (10) comprising:
a turbine section defining a first and a second cavity,
a cooling system (100) having a modulation active mode and a modulation off mode; the cooling system supplying a first feed of cooling air to the first and the second cavities in the modulation off mode and a second feed of cooling air to the first and second cavities in the modulation active mode, the first feed having a greater mass flow rate than a mass flow rate of the second feed;
a first turbine disc defining a portion of the first cavity, a first rim defining another portion of the first cavity;
a second turbine disc defining a portion the second cavity, a second rim defining another portion of the second cavity;
a first temperature sensor (120) configured to sense a sensed temperature within the first cavity at the first rim of the first turbine disc; and,
a controller (140) configured to:
monitor the sensed temperature; and,
place the cooling system (100) in the modulation off mode based on at least a determination that the sensed temperature exceeds a first threshold temperature.

2. The turbine engine of Claim 1 wherein the controller (140) is configured to place the cooling system (100) in the modulation active mode based on at least a determination that the sensed temperature is less than a low temperature threshold.

3. The turbine engine of Claim 1 or 2, wherein the first turbine disc is upstream of the second turbine disc.

4. The turbine engine of any preceding Claim, further comprising:
a second temperature sensor (130) configured to sense a second sensed temperature within the second cavity at the second rim;
and wherein the controller (140) is configured to;
monitor the second sensed temperature; and,
place the cooling system (100) in the modulation off mode based on a at least a determination that the second sensed temperature exceeds a second threshold temperature.

5. The turbine engine of Claim 4, wherein the first and second threshold temperatures are not equal.

6. The turbine engine of any preceding Claim, wherein the first threshold temperature is a function of heat characteristics of at least the first and second turbine discs.

7. The turbine engine of any one of Claims 4 to 6 wherein the controller (140) is configured to place the cooling system (100) in the modulation active mode based on at least a determination that the sensed temperature is less than a low temperature threshold and the second sensed temperature is less than a second low temperature threshold.

8. The turbine engine of any preceding Claim, wherein the first turbine disc is a component of a high-pressure turbine (16) and the second turbine disc is a component of an intermediate-pressure turbine (17).

9. The turbine engine of any preceding Claim, wherein the first temperature sensor (120) is selected from the group comprising a thermocouple, a strain gage, transducer and an electromagnetic transceiver.

10. A method for controlling the modulation cooling air flow in a turbine engine (10), the method comprising:
sensing, by a first temperature sensor (120), a sensed temperature within a first cavity at a rim of a first turbine section, the first cavity defined in part by the first turbine section;
generating, by the first temperature sensor (120), a signal representative of the sensed temperature;
sending, by the first temperature sensor (120) and to a controller (140), the signal representative of the sensed temperature;
monitoring, by the controller (140), the sensed temperature;
determining if the sensed temperature is greater than a first temperature threshold; and,
controlling, by the controller (140), a flow control device (110) to enable cooling air to flow at a first mass flow rate from a cooling air source (92) into the first cavity and a second cavity, based on at least the determination the sensed temperature is greater than the first temperature threshold wherein the second cavity is defined in part by a second turbine section.

11. The method of Claim 10, further comprising:
determining if the sensed temperature is lower than a low temperature threshold;
controlling, by the controller (140), the flow control device (110) to enable the cooling air to flow at a second mass flow rate from the cooling air source (92) into the first and second cavities, based on at least the determination the sensed temperature is lower than the low temperature threshold.

12. The method of Claim 10, further comprising:
sensing, by a second temperature sensor (130), a sensed second temperature within the second cavity at a second rim of the second turbine section;
generating, by the second temperature sensor (130), a signal representative of the sensed second temperature;
sending, by the second temperature sensor (130) and to the controller (140), the signal representative of the sensed second temperature;
monitoring, by the controller (140), the sensed second temperature;
determining if the sensed second temperature is greater than a second temperature threshold; and,
controlling, by the controller (140), the flow control device (110) to enable cooling air to flow at the first mass flow rate from the cooling air source (92) into the first cavity and the second cavity, based on at least the determination the sensed second temperature is greater than the second temperature threshold.

13. The method of Claim 11, wherein the second mass flow rate is less than the first mass flow rate.
